**Europäisches Patentamt**

**European Patent Office**

**Office européen des brevets**

(19)

(11) Veröffentlichungsnummer: **0 234 302**
**B1**

(12) **EUROPÄISCHE PATENTSCHRIFT**

(45) Veröffentlichungstag der Patentschrift:
24.05.89

(51) Int. Cl.⁴: **B29C 55/30**

(21) Anmeldenummer: 87101024.5

(22) Anmeldetag: 26.01.87

(54) Verfahren zum Herstellen von Hohlkörpern aus thermoplastischem Kunststoff.

(30) Priorität: 07.02.86 DE 3603846

(43) Veröffentlichungstag der Anmeldung:
02.09.87 Patentblatt 87/36

(45) Bekanntmachung des Hinweises auf die Patenterteilung:
24.05.89 Patentblatt 89/21

(84) Benannte Vertragsstaaten:
AT BE CH DE ES FR GB GR IT LI LU NL SE

(56) Entgegenhaltungen:
DE-A- 1 704 405
FR-A- 2 320 176
FR-A- 2 516 855
GB-A- 2 052 364
GB-A- 2 085 798
GB-A- 2 090 786

(73) Patentinhaber: Krupp Corpoplast Maschinenbau GmbH.,
Angerburger Strasse 24, D-2000 Hamburg 70(DE)

(72) Erfinder: Albrecht, Peter, Sülzbrackring 1,
D-2050 Hamburg 80(DE)
Erfinder: Appel, Adolf, Bauernworth 11,
D-2111 Egestorf(DE)
Erfinder: Balkau, Karl-Heinz, Deefenallee 8,
D-2000 Oststeinbek(DE)
Erfinder: Clar, Edward, Osdorfer Landstrasse 309,
D-2000 Hamburg 55(DE)
Erfinder: Horwege, Claus, Zimmerstrasse 33,
D-2000 Hamburg 76(DE)
Erfinder: Reymann, Wolfgang, Groten Hoff 15,
D-2000 Hamburg 67(DE)
Erfinder: Vogel, Klaus, Rütersberg 4 a,
D-2000 Barsbüttel(DE)
Erfinder: Wiedenfeld. Walter, Tannenweg 2 b,
D-2000 Hamburg 62(DE)

(74) Vertreter: Koepsell, Helmut, Dipl.-Ing., Mittelstrasse 7,
D-5000 Köln 1(DE)

## Beschreibung

Die Erfindung betrifft ein Verfahren zum Herstellen von Hohlkörpern aus orientiertem thermoplastischem Kunststoff, bei welchem der zylindrische Bereich eines erwärmten, hohlen, mit einem Boden versehenen Vorformlings bei einer Ausgangstemperatur, die unter der Glasumwandlungstemperatur liegt, unter gleichzeitiger Verringerung der Wandstärke gestreckt wird.

Ein solches Verfahren wird, vorzugsweise unter Verwendung von Vorformlingen aus linearen Polyestern, also beispielsweise Polyäthylenteraphtalat (PETP) oder Polybutylenteraphtalat (PBTP), z. B. dann benutzt, wenn Behälter für Füllgüter, die unter hohem Überdruck stehen, wie z. B. kohlensäurehaltige Getränke, herzustellen sind. Im allgemeinen wird dabei so vorgegangen, daß der erwärmte, etwa becherförmige Vorformling, der durch Spritzgießen hergestellt sein kann, über einen Dorn gesteckt wird, dessen Länge zumindest der des gestreckten Formlings entspricht und dessen Außendurchmesser etwa dem Innendurchmesser des Vorformlinges entspricht, der mit dem des gestreckten Formlings im wesentlichen übereinstimmt. Der Streckvorgang wird im allgemeinen so ausgeführt, daß ein Ziehring, ausgehend vom bodenseitigen Ende des Vorformlings, entlang der zylindrischen Wandung desselben in Richtung auf dessen freies Ende bewegt wird. Dabei wird dieser Wandungsabschnitt unter gleichzeitiger merklicher Verringerung seiner Wandstärke z. B. auf das Drei- bis Vierfache seiner Ausgangslänge gestreckt. Der Dorn hat unter anderem die Funktion, den zu streckenden Wandbereich abzustützen, um so eine Durchmesserverringerung desselben während des Streckvorganges zu verhindern.

Zur Erzielung einer hohen Durchsatzleistung ist anzustreben, den Streckvorgang mit möglichst hoher Geschwindigkeit durchzuführen, um so den dafür erforderlichen Zeitaufwand so gering wie möglich zu halten. Andererseits kann jedoch die Streckgeschwindigkeit nicht beliebig gesteigert werden, ohne dadurch die Qualität ds Enderzeugnisses zu beeinträchtigen. In diesem Zusammenhang ist von Bedeutung, daß zwischen der Temperatur des Vorformlinges und der zulässigen Geschwindigkeit des Streckvorganges ein Zusammenhang glich, den Vorformling bei Raumtemperatur zu strecken, jedoch nur bei sehr niedriger Streckgeschwindigkeit. Die Anwendung höherer Streckgeschwindigkeiten erfordert eine vorherige Erwärmung des Vorformlinges, dessen Temperatur jedoch unterhalb der Glasumwandlungstemperatur liegen sollte. Dabei ist ferner zu berücksichtigen, daß der Vorformling während des Streckvorganges durch die damit verbundene Umformarbeit eine zusätzliche Temperatursteigerung erfährt, deren Ausmaß auch wiederum von der Streckgeschwindigkeit abhängig ist. Mithin ist bei der vorhergehenden Erwärmung des Vorformlinges so zu verfahren, daß die sich danach einstellende Temperatur so weit unter der Glasumwandlungstemperatur liegt, daß auch nach der folgenden Temperatursteigerung aufgrund der Umformarbeit während des Streckvorganges zumindest der überwiegende Teil der zu streckenden Wandung des Vorformlinges unterhalb der Glasumwandlungstemperatur bleibt.

Besondere Beachtung erfordert die Anfangsphase des Streckvorganges. Dies gilt vor allem für den Beginn der Anfangsphase, d. h. den Beginn der Einwirkung des Ziehringes auf den Vorformling. Hier muß in jedem Fall mit einer langsameren Geschwindigkeit gestreckt werden, um das für den gewünschten Effekt, d.h., für die zu bewirkende Orientierung der Moleküle in dem den Vorformling bildenden Material erforderliche Fließen des Materials so beginnen zu lassen, daß Überbeanspruchungen desselben, die zu Fehlern im Fertigerzeugnis oder auch zum Abreißen des Vorformlinges während des Streckvorganges führen könnten, zu vermeiden. Weiterhin muß gewährleistet sein, daß die Anfangsphase des Streckvorganges, insbesondere deren Beginn, von Arbeitsgang zu Arbeitsgang, also von Vorformling zu Vorformling in gleicher Weise abläuft, um Erzeugnisse mit gleichen Eigenschaften zu erhalten. Wenn die den Ziehvorgang bewirkende Kraft schlagartig auf den Vorformling zur Einwirkung käme, könne es bezüglich des Bereiches, an welchem der Fließvorgang beginnt und auch hinsichtlich des Ablaufes insbesondere der Anfangsphase des Fließvorganges zu Unregelmäßigkeiten kommen. Dabei ist zusätzlich zu beachten, daß der Bereich des Vorformlinges, in welchem der Streckvorgang beginnt, ohnehin der Übergangsbereich zwischen der zu streckenden zylindrischen Wandung und dem Boden des Vorformlinges darstellt, der keine Streckung erfährt. Es liegt auf der Hand, daß dieser Übergang, an welchem Bereiche des Vorformlinges, nämlich Boden und Wandung, die unterschiedliche Eigenschaften und ggf. auch Dicken aufweisen, ineinander übergehen, für die Qualität des Enderzeugnisses besonders kritisch ist, so daß auch aus diesem Grunde eine definierte und reproduzierbare Anfangsphase des Streckvorganges zur Erzielung eines bestimmten Ergebnisses erforderlich ist.

Aus der GB-A 2 052 364 ist ein Verfahren bekannt, bei welchem der Randbereich eines folien- oder plattenförmigen Zuschnittes, der im Tiefziehverfahren verformt werden soll, eingeklemmt wird, um ihn während des Formgebungsvorganges festzuhalten. Dabei werden die eingeklemmten Bereiche des Zuschnitts beheizt. Zu diesem Zweck sind die das Einklemmen bewirkenden Klemmbacken mit Heizkanälen versehen. Durch die Beheizung des Randbereiches soll erreicht, daß die Fließfähigkeit des ihn bildenden Materials verbessert wird, um so einen Teil des eingeklemmten Randbereiches für die Bildung des herzustellenden Artikels nutzen zu können.

Die Erfindung geht aus von dem einleitend beschriebenen Verfahren. Ihr liegt die Aufgabe zugrunde, dieses Verfahren so zu modifizieren, daß bei hoher Qualität der Enderzeugnisse eine große Durchsatzleistung erreichbar ist. Dabei wird es insbesondere darum gehen, die Streckgeschwindigkeit in der Anfangsphase nicht langsamer als unbedingt erforderlich sein zu lassen.

Zur Lösung dieser Aufgabe schlägt die Erfindung vor, daß der Vorformling in dem Abschnitt, in welchem der Streckvorgang beginnt, vorher auf eine höhere Temperatur erwärmt wird als in dem daran anschließenden Abschnitt und der Abschnitt, der auf eine höhere Temperatur erwärmt wird, etwa dem Übergangsbereich zwischen ungestreckt bleibendem Boden des Vorformlings und dem zylindrischen Randbereich entspricht.

Die Lehre gemäß der Erfindung trägt auch der Tatsache Rechnung, daß in der Anfangsphase des Streckvorganges die zusätzliche Zufuhr von Wärme durch die Umformenergie zwangsläufig geringer ist als in der späteren Phase des Streckvorganges, die sich an die Anfangsphase anschließt.

Der bei der dem Streckvorgang vorangehenden Erwärmung bewirkte Temperaturunterschied zwischen dem Abschnitt, in welchem der Streckvorgang beginnt, und dem daran anschließenden Abschnitt braucht nicht sehr groß zu sein, zumal in jedem Fall anzustreben sein wird, möglichst dicht an die Glasumwandlungstemperatur heranzukommen, ohne daß diese zumindest in den überwiegenden Bereichen der Wandung des Vorformlinges überschritten wird. So hat die Praxis gezeigt, daß im Abschnitt, in welchem der Streckvorgang beginnt, die Temperatur bei 70–75°C liegen kann, wohingegen in dem daran anschließenden zu streckenden Abschnitt niedrigerer Temperatur letztere etwa 65°C betragen kann.

Gemäß einem weiteren Vorschlag der Erfindung kann darüber hinaus so verfahren werden, daß der Streckvorgang entlang der Achse des Vorformlinges mit unterschiedlichen Geschwindigkeiten durchgeführt wird derart, daß der Vorformling in dem Abschnitt, in welchem der Streckvorgang beginnt, mit geringerer Geschwindigkeit gestreckt wird als in dem in Streckrichtung daran anschließenden Abschnitt. Es kann dabei so verfahren werden, daß der Bereich, in welchem der Vorformling mit geringerer Geschwindigkeit gestreckt wird, im wesentlichen dem Bereich höherer Temperatur, d. h. dem Bereich am Übergang zwischen Boden und zylindrischem Wandabschnitt des Vorforlinges entspricht.

In der Praxis kann der Geschwindigkeitsablauf in Abhängigkeit von den jeweiligen Gegebenheiten, wie Eigenschaften des zu streckenden Kunststoffmaterials, Ausgangswanddicke des zu streckenden Bereiches und Temperatur z. B. so gewählt werden, daß in dem Abschnitt geringerer Geschwindigkeit diese etwa 1 m/min beträgt. Diese Geschwindigkeit kann dann in dem daran anschließenden Abschnitt auf z. B. etwa 3 m/min erhöht und bis zum freien Ende des Vorformlinges beibehalten wird.

Die höhere Streckgeschwindigkeit im zweiten Abschnitt hat eine stärkere zusätzliche Erwärmung zumindest von Teilbereichen des Vorformlinges aufgrund der größeren Umformenergie zur Folge, so daß trotz der niedrigeren Temperatur, bis auf welche die Vorformlingswandung in diesem zweiten Abschnitt vor Beginn des Streckvorganges erwärmt worden war, im Ergebnis die Temperatur des Materials im Augenblick des Streckvorganges nicht wesentlich niedriger zu liegen braucht als im ersten Abschnitt, in welchem der Streckvorgang beginnt.

Zwar ist die Streckgeschwindigkeit in dem Abschnitt, in welchem der Streckvorgang beginnt, trotz der höheren Temperatur merklich niedriger als in dem darin anschließenden Abschnitt, jedoch merklich höher als bei bekannten Verfahren, so daß insgesamt das Strecken eines Vorformlinges in verhältnismäßig kurzer Zeit erfolgen kann mit dem Ergebnis, daß eine höhere Durchsatzleistung erzielbar ist. Andererseits ist die Streckgeschwindigkeit in dem Abschnitt, in welchem der Streckvorgang beginnt, immer noch so niedrig, daß ein einwandfreies Ansetzen des Ziehringes am Vorformling erreichbar ist und eine Überbeanspruchung des Materials auch in der Anfangsphase des Streckvorganges vermieden wird. Die daran anschließende Geschwindigkeitssteigerung wird auch dadurch ermöglicht, daß in der Anfangsphase niedriger Geschwindigkeit das zu streckende Material, also die Wandung des zylindrischen Bereiches des Vorformlinges, Gelegenheit hat, über den gesamten Umfang des Ziehringes und damit der zylindrischen Wandung des Vorformlinges sich gleichmäßig auf der Stützschulter des Ziehringes abzustützen, so daß über den Umfang des Ziehringes trotz der hohen Geschwindigkeit in der an die Anfangsphase anschließenden Phase ein einwandfreies Fließen dieses Materials im Zuge des Streckvorganges erfolgt.

In der Zeichnung ist ein Ausführungsbeispiel der Erfindung dargestellt. Es zeigen:

Fig. 1 einen Längsschnitt durch einen Vorformling,
Fig. 2 einen Längsschnitt durch den Vorformling während des Ziehvorganges,
Fig. 3 den Längsschnitt durch das durch den Ziehvorgang hergestellte gestreckte Erzeugnis,
Fig. 4 eine graphische Darstellung des Verlaufs der Temperatur entlang der Längsachse des Vorformlings,
Fig. 5 eine graphische Darstellung der Geschwindigkeit des Ziehringes während des Ziehvorganges,

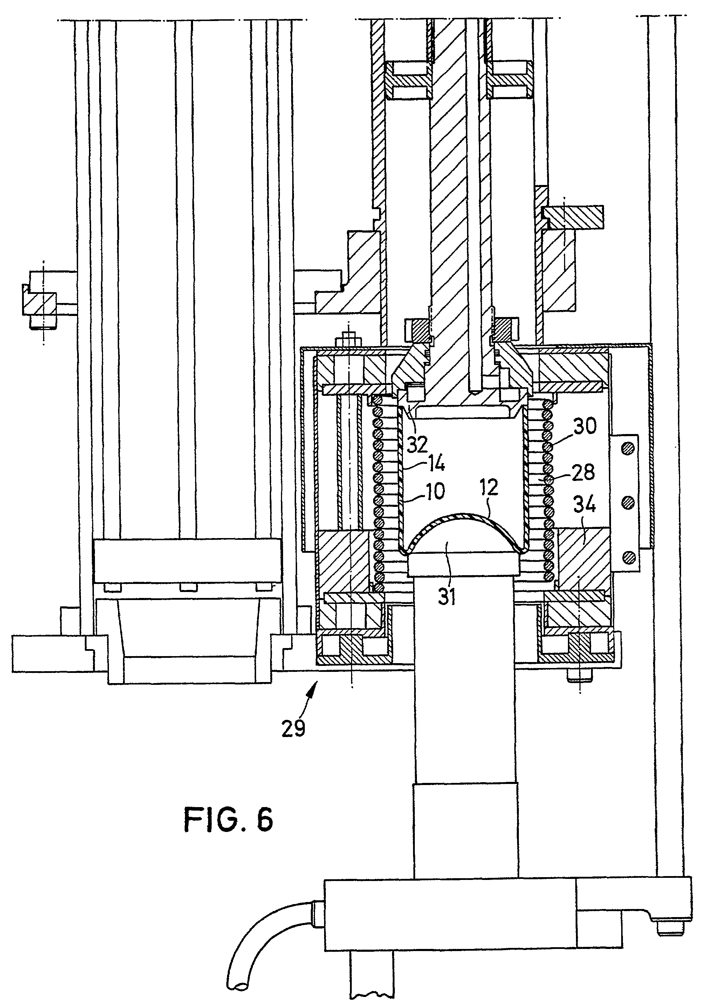

Fig. 6 die Seitenansicht einer Vorrichtung zum Erwärmen des Vorformlinges vor dem Streckvorgang, teilweise im Schnitt.

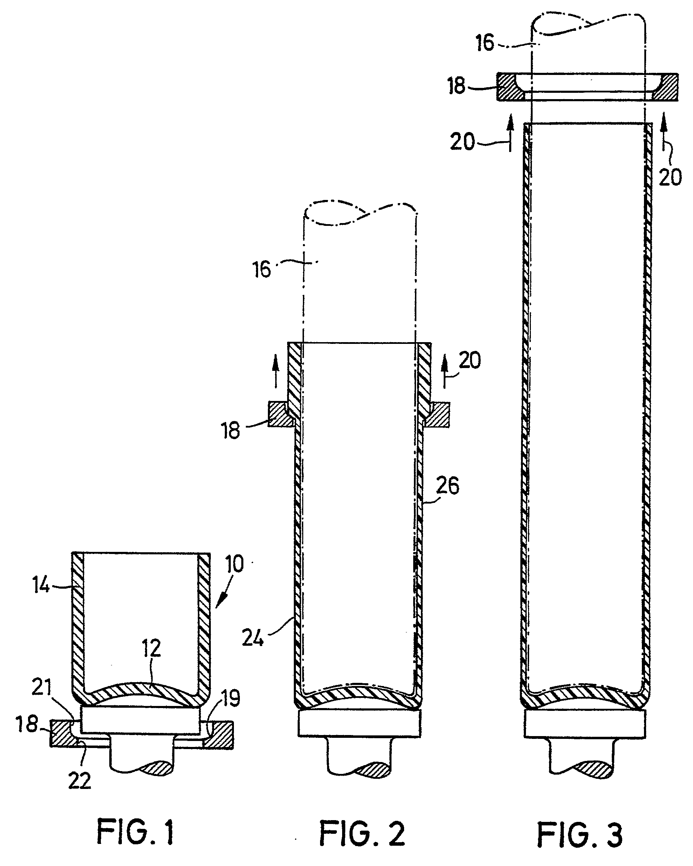

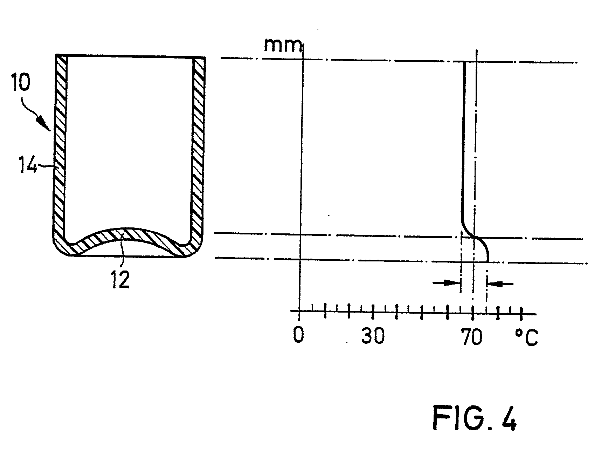

Der in den Figuren 1 und 4 dargestellte becherartige Vorformling 10 besteht aus einem Bodenteil 12 und einem sich daran anschließenden, im wesentlichen zylindrischen Bereich 14, der zur Erzielung der gewünschten mechanischen Eigenschaften des herzustellenden Enderzeugnisses eine Streckung in Richtung des Verlaufs seiner Längsachse derart erfährt, daß beispielsweise die Wandung des zylindrischen Bereiches auf etwa ein Drittel ihrer Ausgangsdicke reduziert wird.

Die Vorrichtung zur Durchführung des Streckvorganges besteht im wesentlichen aus einem Dorn 16 und einem diesen umgebenden Ziehring 18. Zwischen Dorn 16 und Ziehring 18 befindet sich die Wandung des zylindrischen Bereiches 14.

Der Ziehring 18 ist innenseitig mit einer umlaufenden Stützschulter 19 versehen, die derartig konisch verlaufend ausgebildet ist, daß der Innendurchmesser der Stützschulter 19 entgegen der Ziehrichtung 20 abnimmt. Im oberhalb der Schulter 19 befindlichen Bereich 21 größeren Innendurchmessers ist letzterer so gewählt, daß er etwas größer ist als der Außendurchmesser des zylinrischen Bereiches 14 des Vorformlinges 10 in ungestrecktem Zustand. In dem unterhalb der Stützschulter 19 befindlichen Bereich 22 kleineren Innendurchmessers ist letzerer so gewählt, daß er geringfügig größer ist als der Außendurchmesser des bereits gestreckten Abschnittes 24 des Vorformlinges 10, so daß zwischen der äußeren Mantelfläche 26 des bereits gestreck ten Bereiches und dem Bereich kleineren Innendurchmessers des Ziehringes 18 ein Ringspalt verbleibt, dessen radiale Abmessung jedoch relativ klein ist.

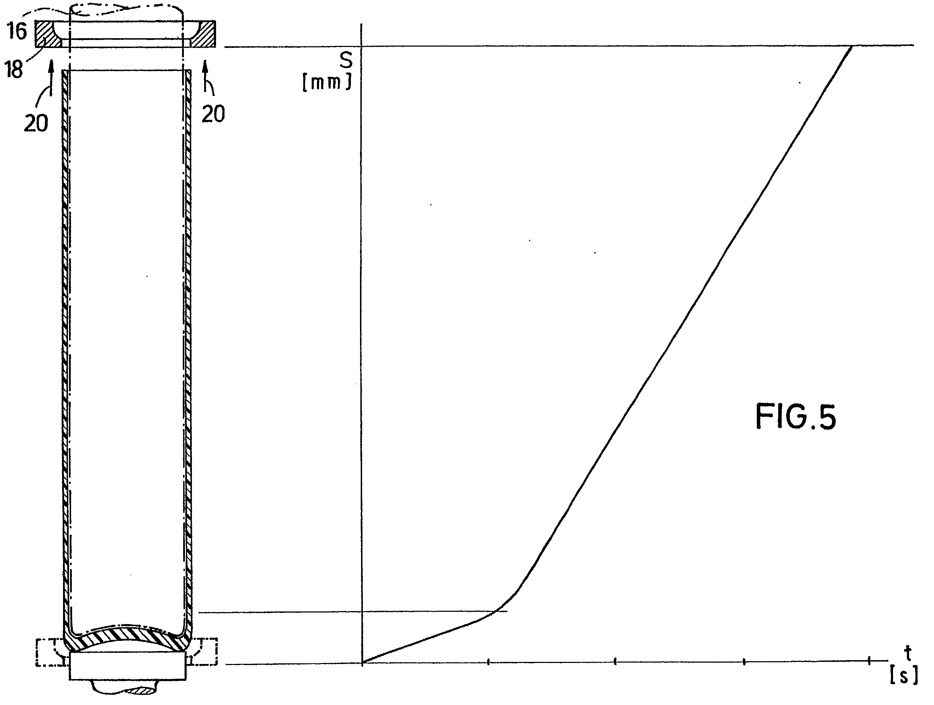

Das Verfahren gemäß der Erfindung wird in der Weise durchgeführt, daß der z. B. im Spritzgießverfahren hergestellte Vorformling 10 erwärmt wird. Dazu wird er in eine Kammer 28 der in Fig. 5 dargestellten Temperiervorrichtung 29 eingebracht. Letztere ist mit einem elektrischen Heizwiderstand in Form einer Wendel 30 versehen, deren Innendurchmesser gemäß der Darstellung der Fig. 5 merklich größer ist als der Außendurchmesser des Vorformlinges 10, so daß zwischen der Heizwendel 30 und dem Vorformling 10 ein freier Ringraum verbleibt. Die Längsachse der Heizwendel 30 ist etwa deckungsgleich mit der Längsachse des Vorforlinges 10. Innerhalb der Heizkammer 28 wird der zu erwärmende Vorformling 10 durch zwei vertikal bewegbare Bauteile gehalten, von denen das untere Bauteil 31, welches der Gestalt des Bodenteiles 12 angepaßt ist, mit letzterem sich in Eingriff befindet, so daß der Vorformling im Ergebnis auf dem Bauteil 31 sitzt. Oberseitig wird der Vorformling 10 durch ein an die obere Begrenzung des zylindrischen Bereiches 14 angepaßtes Bauteil 32 gehalten, welches die Öffnung des Vorformlinges 10 verschließt. Beide Bauteile 31 und 32 sind überdies so ausgebildet, daß sie nur dann mit dem Vorformling 10 in Eingriff sind, wenn letzterer innerhalb der Kammer 28 eine Position einnimmt, in welcher seine Längsachse etwa mit der Längsachse der Kammer 28 zusammenfällt. Da beide Bauteile 31 und 32 den Vorformling 10 auch an den beiden Stirnseiten der Heizkammer 28 nach außen abschirmen, ist eine genaue Erwärmung es Vorformlings 10 auf bestimmte Temperaturen gewährleistet, so daß alle nacheinander in der Wärmekammer 28 erwärmten Vorformlinge 10 die gleichen Temperaturen aufweisen. Der Bodenstempel 31 ist gekühlt, so daß der Boden 12 des Vorformlings kein oder keine merkliche Erwärmung erfährt.

Fig. 5 der Zeichnung läßt erkennen, daß die Wendel 30 im unteren Bereich der Heizkammer 28 außenseitig von einem Ring 34 umgeben ist. Dieser hat die Funktion eines Schirms oder Reflektors derart, daß im Bereich des Ringes 34 die Heizwendel 30 nach außen weniger Wärme abstrahlt mit dem Ergebnis, daß im Bereich der vertikalen Erstreckung des Ringes 34 innerhalb der Wendel 30 eine Temperatursteigerung eintritt, die wiederum dazu führt, daß in diesem Bereich der Vorformling 10 in stärkerem Maße erwärmt wird als in dem oberhalb der oberen Begrenzung des Ringes 34 liegenden Abschnittes des Vorformlinges 10 bzw. des zylindrischen Bereiches 14 desselben.

In Fig. 4 der Zeichnung ist auf der Abszisse die Temperatur in °C aufgetragen. Der Ordinate ist die axiale Erstreckung, also die Höhe des Vorformlinges 10 vor Beginn des Streckvorganges zugeordnet. Der in Fig. 4 dargestellte mittlere Temperaturverlauf über die axiale Erstreckung des Vorformlinges 10 entspricht dem Zeitpunkt zu Beginn des Ziehvorganges. Die Darstellung des Temperaturverlaufs über die axiale Erstreckung des Vorformlinges 10 läßt erkennen, daß im unteren Bereich, der dem in der Heizkammer 28 durch den Ring 34 abgeschirmten Bereich entspricht, die Temperatur, auf die der Vorformling erwärmt worden ist, beispielsweise 75° C beträgt. Diese Temperatur erstreckt sich im konkreten Fall etwa über das untere Siebtel der Höhe des Vorformlinges und geht dann auf eine mittlere Temperatur in der Größenordnung von 65° C über, auf die der Vorformling entlang dem restlichen Bereich seiner axialen Erstreckung gleichmäßig erwärmt worden ist.

In Fig. 5 der Zeichnung ist auf der Ordinate der vom Ziehring zurückgelegte Wege und auf der Abszisse die Zeit aufgetragen. Ferner ist der Abzsisse die axiale Länge des vollständig gestreckten Erzeugnisses zugeordnet. Aus der Kurve des Weg-Zeit-Diagramms in Fig. 5 ergibt sich, daß zunächst im unteren Bereich des Vorformlinges, der etwa dem Bereich erhöhter Temperatur entspricht, der Streckvorgang mit einer Geschwindigkeit begonnen wird, die etwa 1 m/min. beträgt. Nach der Anfangsphase des Streckvorganges wird dann die Geschwindigkeit auf etwa 3 m/min. gesteigert. Diese Streckgeschwindigkeit wird bis zum Ende des Streckvorganges beibehalten.

Die Fig. 2 der Zeichnung zeigt ein Zwischenstadium während des Streckvorganges, bei welchem etwa die untere Hälfte der axialen Erstreckung des Vorformlinges bereits gestreckt worden ist. Fig. 2 läßt erkennen, daß zu diesem Zeitpunkt unter der Voraussetzung, daß die Endlänge des gestreckten Erzeugnisses etwas das Dreifache der Ausgangslänge, also der des Vorformlinges beträgt, die noch unverstreckte Restlänge des Vorformlinges etwa ein Drittel der Länge des bereits gestreckten Abschnittes ausmacht.

Zwar ist beim Ausführungsbeispiel die Anfangsgeschwindigkeit von 1 m/min im Vergleich zur Endgeschwindigkeit von 3 m/min relativ gering. Dies ändert jedoch nichts an der Tatsache, daß im Vergleich zum Stand der Technik durch die Temperaturerhöhung im unteren Abschnitt des Vorformlinges der Ziehvorganges mit einer merklich höheren Geschwindigkeit begonnen werden kann, ohne daß eine Überbeanspruchung des Materials beim Umformvorgang zu befürchten ist. Die höhere Temperatur im unteren Bereich des Vorformlings trägt auch dazu bei, daß trotz der gegenüber bekannten Verfahren höheren Ziehgeschwindigkeit in der Anfangsphase das zu streckende Material an der Stützschulter des Ziehringes sich gleichmäßg und in für den Umformvorgang in vorteilhafter Weise auf der Stützschulter des Ziehringes abstützt, so daß der Übergang zu der im anschließenden Abschnitt des Vorformlinges zur Anwendung kommenden höheren Ziehgeschwindigkeit, die ebenfalls merklich über der Ziehgeschwindigkeit bekannter Verfahren liegt, ohne Schwierigkeiten, insbesondere ohne unzulässige Beanspruchungen des Kunststoffmaterials, bewerkstelligt werden kann.

Die vorstehend genannten Streckverhältnisse von 3 oder 3 -4 sind die bei Verwendung von Polyäthylenteraphtalat üblichen Streckverhältnisse, die innerhalb bestimmter Grenzen auch von der Temperatur abhängig sein können. Bei Verwendung anderer Kunststoffe sind andere Streckverhältnisse möglich.

Das Produkt des Ziehvorganges, also der in den Figuren 3 und 4 dargestellte Formling, kann als Fertigerzeugnis oder als durch weitere Umformvorgänge modifizierbares Zwischenerzeugnis verwendet werden.

## Patentansprüche

1. Verfahren zum Herstellen von Hohlkörpern aus thermoplastischem Kunststoff, bei welchem der zylindrische Bereich eines erwärmten, hohlen, mit einem Boden versehenen Vorformlings bei einer Ausgangstemperatur, die unter der Glasumwandlungstemperatur liegt, unter gleichzeitiger Verringerung der Wanddicke gestreckt wird, dadurch gekennzeichnet, daß der Vorformling in dem Abschnitt, in welchem der Streckvorgang beginnt, vorher auf eine höhere Temperatur erwärmt wird als in dem daran anschließenden Abschnitt und daß der Abschnitt des Vorformlinges, der auf eine höhere Temperatur erwärmt wird, im wesentlichen dem Übergangsbereich zwischen ungestreckt bleibendem Boden und dessen zylindrischem Wandbereich entspricht.

2. Verfahren nach Anspruch 1, dadurch gekennzeichnet, daß der Streckvorgang entlang der Achse des Vorformlings mit unterschiedlichen Geschwindigkeiten durchgeführt wird derart, daß der Vorformling in dem Abschnitt, in welchem der Streckvorgang beginnt, mit geringerer Geschwindigkeit gestreckt wird als in dem in Streckrichtung daran anschließenden Abschnitt.

3. Verfahren nach Anspruch 1 oder 2, dadurch gekennzeichnet, daß der Bereich, in welchem der Vorformling mit geringerer Geschwindigkeit gestreckt wird, im wesentlichen dem Bereich höherer Temperatur entspricht.

## Claims

1. A method of making hollow bodies from thermoplastic material wherein the cylindrical region of a heated hollow preform which is provided with a bottom is subjected to stretching at a starting temperature which is below the vitreous transition temperature, with the wall thickness being reduced at the same time, characterised in that in the portion in which the stretching operation begins, the preform is previously heated to a higher temperature than in the portion adjoining same, and that the portion of the preform which is heated to a higher temperature substantially corresponds to the transitional region between the bottom which remains unstretched and the cylindrical wall region thereof.

2. A method according to claim 1 characterised in that the stretching operation is carried out along the axis of the preform at different speeds in such a way that in the portion in which the stretching operation begins the preform is stretched at a lower speed than in the portion adjoining same in the direction of stretching.

3. A method according to claim 1 or claim 2 characterised in that the region in which the preform is stretched at the lower speed substantially corresponds to the region at higher temperature.

## Revendications

1. Procédé de fabrication d'un corps creux en matière thermoplastique, consistant à prendre une ébauche de formage ou préforme creuse et pourvue d'un fond, à réchauffer d'abord cette préforme à une température de départ inférieure à la température de vitrification, et à étirer ensuite la préforme en réduisant l'épaisseur de sa paroi, procédé caractérisé en ce que l'on réchauffe d'abord la partie de la préforme où s'amorce l'opération d'étirage à une température plus forte que pour la partie adjacente de la préforme, et en ce que la partie de la préforme ainsi réchauffée à une température plus forte correspond sensiblement à la zone de raccordement qui existe entre le fond de la préforme, qui ne subit aucun étirage, et la partie cylindrique de la paroi de cette dernière.

2. Procédé selon la revendication 1, caractérisé en ce que l'on effectue l'étirage de la préforme suivant l'axe de celle-ci en opérant à des vitesses différentes, de manière à étirer la partie de la préforme où s'amorce l'étirage à une vitesse inférieure à la vitesse d'étirage adoptée pour la partie adjacente de la préforme, dans le sens de l'étirage.

3. Procédé selon l'une des revendications 1 ou 2, caractérisé en ce que la zone de la préforme où l'étirage s'effectue à plus faible vitesse correspond sensiblement à la zone de réchauffage à plus forte température.

FIG. 1

FIG. 2

FIG. 3

FIG. 4

FIG.5

S [mm]

t [s]

EP 0 234 302 B1

FIG. 6